# EUROPEAN PATENT SPECIFICATION

(11) **EP 4 303 743 B1**
(45) Date of publication and mention of the grant of the patent: **29.07.2026**
(21) Application number: 23211055.1
(22) Date of filing: 24.05.2019
(51) Int. Cl.: G06F 16/2452, G06F 16/2453, G06F 18/21

(54) **LEARNING-BASED QUERY PLAN CACHE FOR CAPTURING LOW-COST QUERY PLAN**
LERNBASIERTER ABFRAGEPLANCACHE ZUR ERFASSUNG EINES KOSTENGÜNSTIGEN ABFRAGEPLANS
MÉMOIRE CACHE DE PLAN D'INTERROGATION BASÉE SUR L'APPRENTISSAGE POUR CAPTURER UN PLAN D'INTERROGATION À FAIBLE COÛT

(43) Date of publication of application: 10.01.2024
(62) Divisional of application: 19731043.6
(73) Proprietor: Huawei Technologies Co., Ltd., Longgang Shenzhen, Guangdong 518129 (CN)
(72) Inventor: HU, Ron-Chung, Palo Alto California, 94303 (US); GHAZAL, Ahmad, Redondo Beach California, 90278 (US); ZHANG, Mingyi, Santa Clara California, 95050 (US)
(74) Representative: Pfenning, Meinig & Partner mbB

(56) References cited:
- US-A1- 2002 198 867
- US-A1- 2009 100 004
- US-A1- 2009 106 219

## Description

### Technical Field

The present disclosure is related to query processing in a database management system (DBMS), and in particular to a DBMS that caches execution plans for a query based on its execution times to learn a relatively low-cost execution plan for the query. In particular, the present disclosure is related to a query processing method, a query processing device, a computer-readable storage medium and a computer program product.

### Background

Document US 2002/198867 A1 describes an optimizer function of a Relational Database Management System (RDBMS) that generates alternative query execution plans (QEPs) for executing a query, provides an execution model of each of the QEPs, chooses one of the QEPs for execution based on the model associated therewith, and exploits an empirical measurement from the execution of the chosen QEP to validate the model associated therewith, by determining whether the model is in error, and by computing one or more adjustments to the model to correct the determined error.

Document US 2009/198867 A12 discloses techniques for ensuring that a database command is executed according to a query plan that has been verified to be actually optimal.

Document US 2009/100004 A1 discloses a system and a methodology for automatically tuning optimization of database queries based on learning.

Query processing in a DBMS typically involves two distinct phases. The first phase, or compilation phase, checks the syntax and semantics of the query. This phase also includes the generation of an execution plan using query rewrite based on materialized views, indexes, and cost-based optimizations. Query rewrite transforms a first query into an equivalent second query that takes advantage of materialized views and indexes. The second query produces the same results as the first query but at a lower cost. Materialized views are cached results or intermediate results of previously executed queries. An index is a copy of selected columns of data from a table that can be efficiently searched and that may also include a link to the complete row of data from which the index was copied. In addition to using cached materialized views, query rewrite may select from among equivalent operations based on their estimated cost, combine multiple operations, and/or change the order of the operations.

In addition to using query rewrite, query optimization methods use statistics, including data size estimation, to formulate better queries in a cost-based query optimization system. Cost-based optimization may estimate the statistics of table columns used by the query and, based on these estimations, determine particular algorithms to use and a particular order in which to execute the algorithms as a part of query rewrite. Cardinality is a measure of the uniqueness of data values in a particular column of a database. A low cardinality value for the column may indicate a large number of duplicated elements in the column. Cardinality estimates include row counts and numbers of distinct values of base tables (e.g., database columns) and intermediate results (e.g., intermediate data resulting from operations on the base tables). The amount of output data from the execution of each operator is also a cardinality value that can affect performance.

Statistical measures such as row count, number of distinct values, and data size play important roles in operations such as join ordering, selecting the type of join method, and selecting the type of aggregation method to be used in the execution plan for a particular query. For example, DBMSs employ two types of join algorithms, the Nested Loop join algorithm and the Sort Merge join algorithm. For an example join operation, JOIN (A, B), the Nested Loop join algorithm compares each record in table A to each record in table B to generate the joined table while the Sort Merge join algorithm separately sorts table A and table B and combines the sorted tables to generate the joined table. The Nested Loop algorithm is more efficient with relatively small tables while the Sort Merge algorithm is more efficient for relatively large tables.

The cost of an execution plan may be based on one or more metrics resulting from the execution of the plan (e.g., the shortest response time, lowest central processing unit (CPU), lowest input/output (I/O) processing cost, lowest network processing cost, or any suitable combination thereof). The execution plan generated by the cost-based optimizer is fed to the second phase, which executes the plan against database objects and produces the query result. The query processing time is the sum of compilation and execution times.

Users of some DBMSs submit the same query multiple times as they may want to determine how the results of the query change over time. For example, a manufacturer may want to know its sales figures on a weekly, daily, or even hourly basis. In order to minimize the overhead of the compilation phase, many DBMSs store execution plans for particular queries in a cache so that the execution plans may be reused when the same query is submitted multiple times. The cached execution plans allow the compilation phase to be skipped altogether, as the cached plan can be retrieved and passed to the execution phase. The cached plan, however, may not be the best plan for each instance of the query due to errors in the estimated statistics and/or changes in the database.

### Summary

In order to solve the above mentioned problems, the invention provides a query processing method according to claim 1, a query processing device according to claim 4, a computer-readable storage medium according to claim 7 and a computer program product according to claim 8.

A DBMS parses a query to generate an execution plan. The examples described herein find a best execution plan from among multiple successive execution plans generated for multiple instances of the same query and store the best execution plan for use by future instances of the query. Each time a query in training mode is received, the DBMS generates an execution plan for the query, executes the execution plan, and stores execution plan statistics. After the multiple instances of the query have been processed, the DBMS selects one of the multiple stored execution plans as the best execution plan based on respective stored execution plan cost statistics. The examples described herein include two methods for selecting the best execution plan. The first method compares a currently generated execution plan to a previously generated execution plan and marks the query as not in training mode when the current and previous execution plans are identical. The stored execution plan having the lowest cost is the selected execution plan for the query. The second method compares the actual execution cost of the currently generated execution plan to a stored actual execution cost of a previous execution plan and marks the query as not in training mode when the cost of the current execution plan is greater than the cost of the previous execution plan. The previous execution plan is the selected execution plan for the query. When the DBMS receives a query that is not in training mode, it uses the stored execution plan instead of compiling the query to generate an execution plan. This results in a significant time savings because the compilation time is eliminated and the execution plan used for the query is one that has been determined to have a low cost.

According to a first aspect, a query processing device includes a communication interface for accessing a database and a query storage; a memory storing instructions; and a processor in communication with the query storage and the memory. The processor executes the instructions to receive a a query, to determine that the query is in training mode and that a prior execution plan and prior execution plan statistics are stored in the query storage as a result of a prior submission of the query, and to generate a current execution plan for the query. The processor executes the current execution plan on data in the database and collects current execution plan statistics; stores the current execution plan and the current execution plan statistics in the query storage; determines, based on the current execution plan and the prior execution plan, that the query is not in training mode; and selects an execution plan for the query from among a plurality of execution plans for the query, including the prior execution plan and the current execution plan stored in the query storage. The processor stores the selected execution plan for the query in the query storage with an indication that the query is not in training mode.

In a first implementation form of the device according to the first aspect as such, the processor is configured to determine that the query is not in training mode when the current execution plan is identical to the prior execution plan.

In a second implementation form of the device according to the first aspect as such, each of the plurality of execution plans for the query stored in the query storage includes a respective cost value, and the processor is configured to select the execution plan having a lowest cost value among the plurality of execution plans as the selected execution plan for the query.

In a third implementation form of the device according to the first aspect as such, the prior execution plan for the query is a last executed execution plan for the query prior to the current execution plan for the query; and the processor is configured to determine that the query is not in training mode by determining that a cost value of the current execution plan for the query is greater than a cost value of the prior execution plan for the query.

In a fourth implementation form of the device according to the first aspect as such, the processor is configured to select the prior execution plan for the query as the selected execution plan for the query.

In a fifth implementation form of the device according to the first aspect as such, the processor is configured to receive a first submission of the query and to determine that no execution plans for the first submission of the query are stored in the query storage. The processor is further configured to generate the first execution plan for the first submission of the query based on an estimate of a cost of executing the query, to execute the first execution plan and collect first execution plan statistics, to generate a hash value for the query, and to store the first execution plan and the first execution plan statistics in the query storage indexed by the hash value.

In a sixth implementation form of the device according to the first aspect as such, the processor is configured to generate multiple steps for the current execution plan, to generate respective hash values for the multiple steps, and to retrieve statistics from the query storage for each of the multiple steps having stored statistics using the respective hash values as an index. The processor is further configured to generate estimated statistics for each of the multiple steps that do not have stored statistics; and to produce an estimated cost for the query based on the retrieved statistics and the generated estimated statistics.

According to a second aspect, a method for processing queries includes receiving a query, determining that the query is in training mode and that a prior execution plan and prior execution plan statistics were stored as a result of a prior submission of the query, and generating a current execution plan for the query. The method further includes executing the current execution plan, collecting current execution plan statistics during the execution of the current execution plan, and storing the current execution plan and the current execution plan statistics. The method includes determining, based on the current execution plan and the prior execution plan, that the query is not in training mode, selecting an execution plan for the query from among a plurality of stored execution plans for the query, including the prior execution plan and the current execution plan, and storing the selected execution plan for the query with an indication that the query is not in training mode.

In a first implementation form of the method according to the second aspect as such, determining that the query is not in training mode includes determining that the current execution plan is identical to the prior execution plan.

In a second implementation form of the method according to the second aspect as such, each of the plurality of execution plans for the query stored in the query storage includes a respective cost value and selecting the execution plan for the query includes selecting the execution plan having a lowest cost value among the plurality of execution plans.

In a third implementation form of the method according to the second aspect as such, the prior execution plan for the query is a last executed execution plan for the query prior to the current execution plan for the query and determining that the query is not in training mode includes determining that a cost value of the current execution plan for the query is greater than a cost value of the prior execution plan for the query.

In a fourth implementation form of the method according to the second aspect as such, selecting the execution plan for the query includes selecting the prior execution plan as the selected execution plan for the query.

In a fifth implementation form of the method according to the second aspect as such, the method further includes receiving a first submission of the query, determining that no stored execution plans exist for the first submission of the query, and generating the first execution plan for the first submission of the query based on an estimate of a cost of executing the query. The method further includes executing the first execution plan, collecting first execution plan statistics and storing the first execution plan and the first execution plan statistics.

In a first implementation form of the method according to the second aspect as such, the method further includes generating multiple steps for the current execution plan, retrieving statistics from the query storage for each of the multiple steps having stored statistics, generating estimated statistics for each of the multiple steps that do not have stored statistics, and producing an estimated cost for the query based on the retrieved statistics and the estimated statistics.

According to a third aspect, a non-transitory computer-readable media stores instructions that, when executed by one or more processors, cause the one or more processors to receive a query, determine that the query is in training mode and that a prior execution plan and prior execution plan statistics were stored as a result of a prior submission of the query, and generate a current execution plan for the query. The instructions further cause the one or more processors to execute the current execution plan, collect current execution plan statistics during the execution of the current execution plan, and store the current execution plan and the current execution plan statistics. The instructions also cause the one or more processors to determine, based on the current execution plan and the prior execution plan, that the query is not in training mode; select an execution plan for the query from among a plurality of stored execution plans for the query, including the prior execution plan and the current execution plan; and store the selected execution plan for the query with an indication that the query is not in training mode.

In a first implementation form of the method according to the third aspect as such, the instructions that configure the one or more processors to determine that the query is not in training mode include instructions that configure the one or more processors to determine that the current execution plan is identical to the prior execution plan.

In a second implementation form of the method according to the third aspect as such, each of the plurality of execution plans for the query stored in the query storage includes a respective cost value, and the instructions that configure the one or more processors to select the execution plan for the query include instructions that configure the one or more processors to select the execution plan having a lowest cost value among the plurality of execution plans as the selected execution plan for the query.

In a third implementation form of the method according to the third aspect as such, the prior execution plan for the query is a last executed execution plan for the query prior to the current execution plan for the query and the instructions that configure the one or more processors to determine that the query is not in training mode include instructions that configure the one or more processors to determine that a cost value of the current execution plan for the query is greater than a cost value of the prior execution plan for the query.

In a fourth implementation form of the method according to the third aspect as such, the instructions that condition the one or more processors to select the execution plan for the query include instructions that configure the one or more processors to select the prior execution plan for the query as the selected execution plan for the query.

### Brief Description of the Drawings

FIG. 1 is a block diagram of a system for processing database queries according to an example embodiment.
FIG. 2 is a flowchart of a query caching method according to an example embodiment.
FIG. 3 is a flowchart of a query caching method according to another example embodiment.
FIG. 4 is a flowchart of a query processing method according to an example embodiment.
FIG. 5 is a flowchart of a query execution method according to another example embodiment.
FIG. 6 is a block diagram of a computing device for performing query processing according to an example embodiment.

### Detailed Description

In the following description, reference is made to the accompanying drawings that form a part hereof, and in which are shown by way of illustration specific embodiments which may be practiced. These embodiments are described in sufficient detail to enable those skilled in the art to practice the disclosed subject matter, and it is to be understood that other embodiments may be utilized, and that structural, logical, and electrical changes may be made without departing from the scope of the appended claims. The following description of example embodiments is, therefore, not to be taken to limit the appended claims.

As described herein, DBMSs that run the same query multiple times may generate and cache a single execution plan, based on estimated statistics for the query. The cached execution plan is used for all instances of the query. The estimated statistics, however, may be erroneous and/or the contents of the database may change over time, such that the stored execution plan is not the best plan to use for every instance of the query. Example embodiments described herein use closed-loop feedback to provide actual statistics for the execution plans and, optionally, actual step statistics for each step of each execution plan. The closed-loop feedback allows the embodiments to better evaluate different options, and therefore find a better plan for the query over multiple submissions. Because the embodiments use statistics collected during the execution phase, there is less overhead during the compilation phase as fewer statistics need to be estimated. In addition, the example embodiments operate in a training mode during a training period to continually update the query execution plan and its statistics until no better plans are identified. During the training period, the DBMS determines an execution plan for the query based on actual and estimated statistics. As described herein, the training period ends either when the cost of current execution plan is greater than the cost of the immediately prior execution plan or when the current execution plan is the same as the immediately prior execution plan. In both of these instances, the prior execution plan is identified as the execution plan to be used for the query. The identified execution plan is used for ongoing submissions of the query, until the query is again put into training mode to modify the execution plan to accommodate changes in the contents of the database. A query may be put back into training mode when the actual execution cost for the stored execution plan is greater than the stored execution cost for the plan.

Embodiments described herein employ feedback from the execution phase to the compilation phase to store statistics on the execution of each execution plan for each query processed by the DBMS. These embodiments store statistics, including respective execution costs, for the execution plans. After executing a current execution plan for a query, the described embodiments compare the cost of one or more of the previous execution plans for the same query to determine whether the current execution plan has a lower cost.

The embodiments herein describe two methods for identifying a relatively low-cost execution plan for a query by compiling and executing multiple instances of the query in the training mode. A first method embodiment generates and executes multiple different execution plans for the query during the training mode. The training mode ends when the system generates the same execution plan for successive instances of the query, indicating that no new execution plans will be generated. This embodiment stores the cost of each query plan and selects the lowest-cost execution plan after the query is out of the training mode, with the selected execution plan to be used for future instances of the query.

A second method generates and executes multiple different execution plans for the query during the training mode. The second embodiment, however, exits the training mode when a current execution plan has a higher cost than a previous execution plan. The previous execution plan is then selected as the execution plan to use after the query is out of the training mode.

In addition to storing the cost of one or more previous instances of the execution plans for one or more queries, embodiments described herein maintain statistics including the cardinality and data size of columns, indices, materialized views, and intermediate results used by steps of the execution plans in the execution phase. The cardinality and data size values and other stored and/or estimated statistics may be used by a query rewrite function of a cost-based optimizer in the compilation phase to generate a current best execution plan for the query. The execution plan determined from the stored step statistics, however, may not be the overall best plan for the query because the cost-based optimizer may not have access to the collected statistics for the columns, indexes, intermediate results, and materialized views used by the query. Although the embodiments described herein describe storing and comparing costs for entire execution plans, it is contemplated that costs for individual steps could also be stored to determine a best implementation of each step.

For each query, the DBMS caches the following data in a query storage: the query statement, (e.g., a structured query language (SQL) query statement), having fully qualified table/column names, the current compiled execution plan, the query cost (e.g., the query response time), a Boolean value indicating whether the query is in training mode, and a key-value identifying the query. The key-value for the query may be a hash value derived from the query statement or from a query tree generated from the query statement. The key-value may be a hash value generated from the text of the query and/or query step, for example, by applying the MD5 hash function. It should be understood that other or additional data for the query may be cached or stored by the DBMS.

As described above, when a query includes multiple steps, the DBMS may separately maintain statistics, including execution costs for each step in the query. In addition, the DBMS may cache statistics, including cardinality values for columns, indexes, intermediate results, and materialized views used and/or generated by steps of the execution plans. In order to access these statistics quickly, the DBMS generates and stores hash keys for the steps. The query optimizer may use the keys for the execution plans and for the steps to access the stored data on the queries and/or the stored statistics for the steps to generate an execution plan for a new query or a new execution plan for an instance of a previously executed query. The query optimizer uses this data to perform query rewrite (e.g., to select particular operations to perform, to select a particular order of operations, and/or to use materialized views and indexes that are equivalent to columns in the query as processed by operations specified by the query).

As described above, execution plans generated by cost-based query optimizers may be sensitive to the accuracy of the statistics that are used to generate the cost estimates. A cost-based query optimizer may select an execution plan for a query from among multiple execution plans. The selected execution plan may have the lowest cost (e.g., the shortest response time, lowest CPU and/or I/O processing cost, and/or lowest network processing cost). These costs are significantly affected by the amount of data being processed (data size) and the number of different data values being processed (cardinality).

Statistical estimation can exhibit considerable variation and may overestimate or underestimate the true cardinality and data size values. Many relational DBMSs use the ANALYZE command to collect cardinality and data size values. The ANALYZE command generates statistics for a table or an individual column of a table. In addition to the total number of values, the ANALYZE command may return other statistics, such as a break-down of the number of different entries in the table or column. Running the ANALYZE command may be expensive, especially on a large data set. Consequently, statistics generated from one invocation of an ANALYZE command may be stored and used for future operations on the table or column. After the table or column has experienced multiple inserts, deletes, and updates, however, these statistics may become stale and the database administrators need to rerun the ANALYZE command to refresh the statistics. As an alternative to using the ANALYZE command, a DBMS may obtain statistics, including cardinality data, from single-dimensional or multi-dimensional histograms or histograms of the table. Generating these histograms also adds significant overhead in the compilation phase.

Errors in cardinality estimation may result from correlated columns referenced in a predicate or join condition. For example, consider the following query:
**SELECT customer_id, purchase_price FROM car_sales WHERE Maker = 'Honda^{®}' AND Model = 'Accord^{®}'**
In this query, "Maker" and "Model" are separate columns of the table. These columns, however, may have high correlation because the model names used by each automaker are typically exclusive to that automaker.

Another possible source of cardinality estimation errors results from expressions containing "regular expressions." As used herein, a "regular expression" is a sequence of characters that define a search pattern. An example regular expression includes the following:
**WHERE product_name LIKE '%green%' or**
**WHERE o_comment NOT LIKE '%special%requests%'**
The first expression searches the product name field of a database for names that include the characters "green." The second expression searches the other comments field of the database for comments that are not special requests. Because the results of these searches are unknown, it is difficult to estimate the size of the data resulting from use of the expressions.

Example embodiments attempt to choose the best execution plan for a query in training mode from among different execution plans generated for the query based on the actual cost of the execution plans and, optionally, on stored and estimated cardinalities determined for the steps of the execution plan. As described above, existing query optimizers use cardinality estimation to select the best plan from among the different execution plans. A query optimizer according to an example embodiment overcomes the problems with generating execution plans by learning a relatively low-cost execution plan for the query during a training period and caching that low-cost execution plan for use after the training period.

During the training period, the embodiments described herein may also reuse statistics from steps of previous execution plans to obtain cardinality information for use by later queries. The execution phase for this solution includes a producer side, and the compilation phase includes a consumer side. The producer side captures the cardinality statistics of actual step executions and costs for actual execution plans. The execution engine saves the cardinalities into a catalog table of the DBMS and the costs for the query and for each of the steps into a query storage, which may be part of the catalog table.

The consumer side is the statistics estimation component of the optimizer. When the received query is in training mode, the consumer side fetches the statistics from catalog and uses the fetched statistics to generate and select one or more execution plans for the received query. When the received query is not in training mode, the query optimizer retrieves the cached query.

The device and method can use stored statistics about a query collected during a training mode to choose a best execution plan from among a set of previous execution plans for the query. When the query is in the training mode, the device and method can also re-use statistics for steps in the execution plan, which were collected during previous execution of the steps, to generate new execution plans. The device and method can be used for query optimization. The device and method can be used for selecting an execution plan. The device and method can be used for determining and selecting a lowest cost execution plan. The device and method can be used for re-using previously generated cardinality values instead of using cardinality estimates. The device and method can be used to improve database query performance through improved statistics estimation. The device and method can be used to improve database query performance through re-use of previous cardinality values instead of relying on estimates of cardinality values. The device and method can be used to maximize the reusability of previously executed query execution plans and the steps that constitute the previously executed plans.

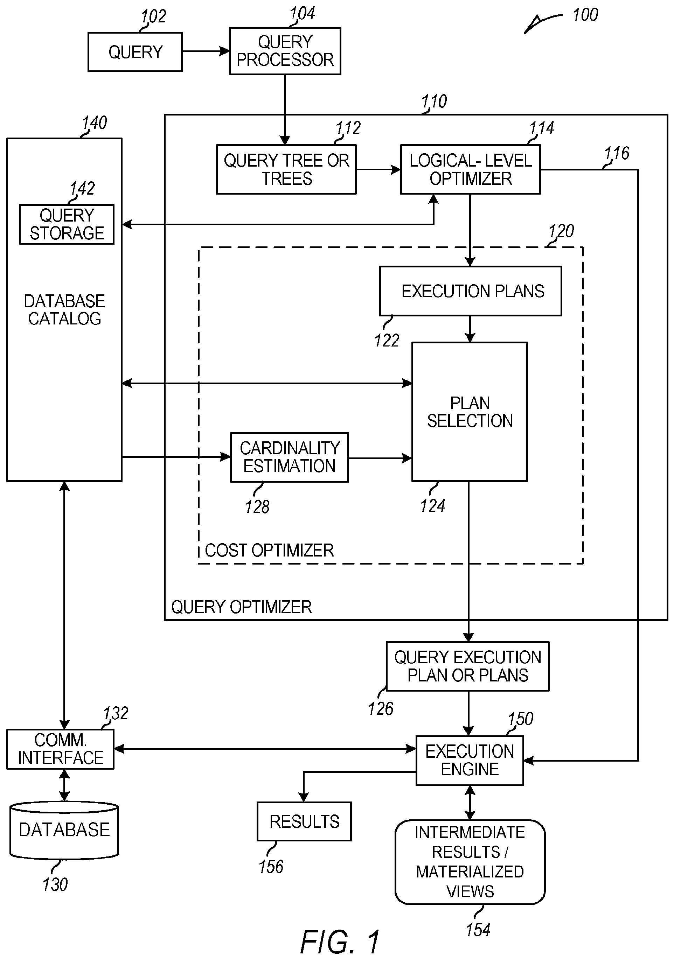

**FIG. 1** is a block diagram of a system 100 for processing database queries according to an example embodiment. The system 100 in the embodiment shown is in communication with a query source 102 that generates and/or receives a database query. In the examples described herein, a query can include information obtained from a database column, a set of input values, an intermediate result generated by a previous logical step, or any suitable combination thereof. The examples described herein use SQL queries, although it is contemplated that other query languages may be used.

The system 100 in the embodiment shown includes a query processor 104, a query optimizer 110 including logical-level optimizer 114 and a cost-based (physical-level) optimizer 120, a communication interface 132 for communicating with a database 130, a database catalog 140, and an execution engine 150. The database catalog 140 includes a query storage 142. The system 100 in some embodiments comprises database management system (DBMS) technology. The communication interface 132 can communicate with one or both of the database 130 and the database catalog 140, including the query storage 142. The execution engine 150 can also interface directly with the database catalog 140 and/or query storage 142. In this configuration, the communication interface 132 may include memory access circuitry and/or I/O circuitry configured to interface the execution engine 150 with the database 130 and/or the database catalog 140 and query storage 142.

The query storage 142 can store (or cache) queries and versions of queries. The query storage 142 can store (or cache) query execution plans, including other information accompanying each individual query. In one example, the query storage 142 stores: 1) the query statement having fully qualified tables and/or columns; 2) the compiled current best execution plan; 3) the cost for the current best execution plan; 4) a Boolean value indicating whether the query is in training mode; 5) the hash key value calculated by applying the hash function to the query statement having fully qualified table and/or column names; and, when the query is in training mode, 6) the most recently compiled execution plan for the query and 7) the cost of the most recently compiled execution plan. In another example, the query storage 142 stores: 1) the query statement having fully qualified table and/or column names; 2) the compiled most recent execution plan (when the query is in training mode) or best execution plan (when the query is not in training mode); 3) the cost for the most recent or best execution plan; 4) a Boolean value indicating whether the query is in training mode; and 5) the hash key value calculated by applying the hash function to the query statement having fully qualified table and/or column names. It should be understood that other information or information combinations is contemplated to be stored in the query storage 142, and other such information is within the scope of the description and claims

The system 100 can comprise various components. The system 100 in one example embodiment comprises the query optimizer 110 and the communication interface 132. The system 100 in another example embodiment comprises the query processor 104, the query optimizer 110, and the communication interface 132. The system 100 in one example embodiment comprises the query processor 104, the query optimizer 110, the communication interface 132, and the database catalog 140. The system 100 in one example embodiment comprises the query processor 104, the query optimizer 110, the communication interface 132, the database catalog 140, and the execution engine 150. The system 100 in one example embodiment comprises the query processor 104, the query optimizer 110, the database 130, the communication interface 132, the database catalog 140, and the execution engine 150. Other components or component combinations are contemplated and are within the scope of the discussion and claims.

In some embodiments, the query processor 104 parses a received and/or generated query into multiple logical steps to generate a query tree or trees 112. Each query tree includes a root logical step, one or more child logical steps, and one or more leaf logical steps that do not have child logical steps. Each logical step may have a canonical form, following a defined syntax, and a fully-qualified source name or fully-qualified source names arranged in a predetermined order. The source names may be names of columns of a table, intermediate results, and/or cached materialized views. The logical steps generated from the queries by the examples described herein are canonical in that the logical steps have a syntax defined by rules, such that two queries which include the same logical step generate the same textual representation of that logical step.

In some embodiments, the query processor 104 checks the syntactical structure of the query provided by the query source 102 in addition to generating a query tree or trees 112. The query processor 104 may perform query rewrite according to predefined rules to generate one or more query trees 112 based on the received original query 102. The query processor 104 analyzes the semantics of the query tree or trees 112 to determine whether issues exist, such as incompatible operations types or references to non-existent tables. Although not shown in FIG. 1, the query processor 104 may access information from the database catalog 140 to implement these functions.

The query optimizer 110 processes the logical steps in the one or more query trees 112 to generate one or more query execution plans 126 for execution by the execution engine 150, such as a first execution plan and a second execution plan. For simplicity, the discussion hereinafter recites the first execution plan and the second execution plan, but it should be understood that any number of query execution plans may be generated. In order to generate the one or more query execution plans 126, the query optimizer 110 and cost-based optimizer 120 may access and/or receive information from the database catalog 140 and/or a query storage 142. In the example embodiment, at least some of the sources accessed by the queries reside in the database 130.

The query optimizer 110 includes a logical-level optimizer 114 that applies rules and, when actual cardinalities exist, retrieves the actual cardinalities of the logical steps in the query tree or trees 112 from the database catalog 140 (as opposed to using estimated cardinalities) to generate execution plans for the query tree or trees 112 based on the retrieved cardinalities and optimization rules. The logical-level optimizer 114 may also employ a query rewrite, based on stored values of query statistics. The logical-level optimizer 114 may calculate separate hash values for each of the query tree or trees 112 and for each sub-branch of each of the query tree or trees 112, including individual logical steps to access statistics on the current execution plan and to access statistics on each step of the execution plan represented by the query tree trees 112.

The optimizer 114 determines whether the query is in training mode. When the query is not in training mode, the system 100 uses the execution plan for the query that is stored in the query storage 142. The optimizer 114 accesses this plan from the query storage 142 using a hash value generated from the query statement or from one of the query trees. As described herein, this execution plan was previously determined to be better than any of the other execution plans that were generated for the query. This execution plan is provided directly by the logical-level optimizer 114 to the execution engine 150, as indicated by the arrow 116.

When the query is in training mode, the system 100 has not yet determined that one execution plan is better than any of the other execution plans generated by the system 100. Consequently, the system 100 continues to generate new execution plans based on information about the query that was measured during the execution of the prior execution plans. This information includes the cardinalities and costs of steps in previous query trees generated for the query. When the current query tree includes any of these steps, the logical-level optimizer 114 accesses the actual statistical data from the database catalog 140 based on the hash value of the step to determine a current execution plan for the query. Because the logical steps in the query are generated according to the canonical forms, as described herein, the same logical steps occurring in different query trees have the same text and, thus, the same hash value. Thus, if the cardinalities for the logical steps are stored in the database catalog 140 and are indexed by their hash values, the logical-level optimizer 114 may quickly retrieve the cardinalities and costs for previously executed queries and/or for each previously executed subpart.

The logical-level optimizer 114 may then generate a plurality of execution plans 122 and evaluate the different plans based on the returned cardinalities and costs. The execution plans 122 may be generated by a query rewrite. They can specify different orders of execution for the logical steps and/or different types of operations (e.g., different types of join operations such as Hash Join, Nested Loop Join, or Merge Join). As described above, the stored statistics for the source and/or column and/or the size of the output results can affect the cost of each logical step in the execution plan and, thus, the cost of the overall execution plan.

The cost-based optimizer 120 receives the execution plans 122 for queries that are in training mode and applies these plans to a plan selection module 124. The plan selection module 124 accesses the database catalog 140 and/or the query storage 142 and a cardinality estimation module 128 to select one or more of the execution plans 122. When cardinality data for a logical step of a particular execution plan 122 is stored in the database catalog 140, the plan selection module 124 uses the stored data. In example systems, the cardinality data retrieved by the logical-level optimizer 114 may be passed with the execution plans 122, the query tree, and the query to the plan selection module 124. When the database catalog 140 does not include cardinality data for a logical step or for a table, the cardinality estimation module 128 generates an estimate of the cardinality of a table, for example, by using statistics previously generated by an ANALYZE command, by sampling data in the table, and/or by generating histograms of the table.

The plan selection module 124 also accesses cost functions from the database catalog 140 to estimate costs for the execution plans 122. The cost functions can use cardinality estimations from the database catalog 140 and/or from the cardinality estimation module 128 and/or other stored and/or estimated statistics to estimate the cost of executing each plan. The plan selection module 124 selects one or more of the lower cost execution plans 122 as the query execution plan or plans 126.

The execution engine 150 executes the query execution plan or plans 126 using data in the database 130 to generate intermediate results and/or materialized views 154, which are further processed to generate the output results 156. As a part of executing the query execution plan or plans 126, the execution engine 150 determines the actual statistics of the component tables of the queries and of the intermediate results and/or materialized views 154. These statistics data are fed back to the database catalog 140, with the corresponding hash values, in a closed-loop configuration for use in the optimization of subsequent query sources 102. The execution engine 150 also determines the cost of executing each of the query execution plan or plans 126 and stores this cost with the data on the query in the query storage 142.

As described herein, each query can include one or more predicates. Each predicate may be defined as a condition under which a given portion of a data table satisfies a portion of the execution plan 122. Such predicates can be determined and/or evaluated based on one or more materialized views 154.

The plan selection module 124 selects the execution plan 122 having the smallest cost. As these costs are based on statistics including cardinality estimates, better statistics can improve the performance of the plan selection module 124. For example, the cost of performing a query may depend on the order of operations in one of the execution plans 122. A plan that evaluates the logical steps of the query tree in one order may produce a larger intermediate result or materialized view than a plan that evaluates the logical steps in a different order. Thus, it is desirable to know not only the cardinality of the source tables but also the cardinality of any intermediate tables and materialized views that may be generated by a query plan. As part of execution plan generation, the logical-level optimizer 114 may specify the order of query operations (e.g., predicate evaluation or combination of predicates) such that operations that are expected to generate smaller intermediate results and/or materialized views 154 occur earlier in the execution plan than query operations that are expected to generate larger intermediate results and/or materialized views 154. Such ordering can be performed on the basis of cardinality estimates, which can be regarded as an expected size of the intermediate result and/or materialized view. The execution engine 150 may determine the cardinality of these intermediate results and/or materialized views 154 during execution of a first query plan and make these cardinality values available for use by the logical-level optimizer 114 and/or the plan selection module 124 to generate/select the best query execution plan for a later occurring query.

The examples below describe a general and logical canonical form which allows the execution engine 150 to capture information in each logical step in the query. The canonical form logical steps (and their corresponding cardinality statistics) are saved into the database catalog 140 by the execution engine 150. On the consumer side, the query optimizer 110 generates the query tree, including the logical canonical form logical steps, and accesses the database catalog 140 to quickly find the matching canonical forms and their associated cardinality and data size information.

The examples described herein collect statistics on logical steps of previously executed queries and make these statistics available to generate execution plans for later-occurring queries. The canonical forms of the logical steps of the execution plans allows the query optimizer 110 to determine the best execution plan, based on a set of execution steps, because the query optimizer 110 can quickly determine the cardinality of the execution steps, database columns, intermediate results and/or materialized views based on the actual cardinality of the same previously executed steps using the same database columns and intermediate results. The granularity of statistics maintained by the system 100 is both at the query level and at the execution step level. Furthermore, the cost-based optimizer 120 uses the collected statistics, accessed by hash values derived from the text of the steps, to perform physical query optimization. The general canonical form, described herein, is at the logical level. It does not include information such as join order, join algorithm, group-by order, or predicate order. The collected statistics, however, allow the query optimizer 110 to select one or more of the alternative execution plans 122 based on actual statistical data for each logical step contained in the database 130.

The cost-based query optimizer 110 performs physical optimization. The examples described herein use the terms "logical" and "physical" to distinguish between the query optimization performed by the logical level optimizer 114 (logical optimization) and the cost-based query optimizer 110 (physical optimization). Logical query optimization selects plans based on rules and the retrieved statistical data for previously performed steps accessed from the database catalog 140 based on key values derived from the text of the steps. This statistical data may not be complete, however, as not all steps in the query plan may have been previously executed and not all database columns and intermediate results may have been previously processed. The cost-based query optimizer 110 also considers estimated cardinality values for steps that have not been previously performed and the effects of the configuration of the execution plan (e.g., join order, join algorithm, group-by order, and predicate order) on the cost of the execution plan.

As described herein, each logical step is represented in a canonical form and has a corresponding hash value. The hash value may be generated by applying a hash function, for example, the MD5 hash function, to the textual representation of the logical step. The hash value allows the logical-level optimizer 114 and/or the plan selection module 124 to quickly find statistics for a particular logical step in the database catalog 140.

The hash value, and its associated statistics information for each step in the execution plan, are saved in the database catalog 140. The information stored in the database catalog 140 for the step of the execution plan is similar to the information stored for the query in the query storage 142. In particular, the database catalog 140 may store: 1) the canonical form for the query step having fully qualified tables and/or columns; 2) the compiled current best execution plan for the step; 3) the cost for the current best execution plan for the step; 4) a Boolean value indicating whether the step is in training mode; 5) the hash key value calculated by applying the hash function to the canonical form of the step; and, when the step is in training mode, 6) the most recently compiled execution plan for the step and 7) the cost of the most recently compiled execution plan for the step. In another example, the database catalog 140 stores: 1) the canonical form of the step having fully qualified table and/or column names; 2) the compiled most recent execution plan for the step (when the query is in training mode) or determined best execution plan for the step (when the query is not in training mode); 3) the cost for the most recent or best execution plan; 4) a Boolean value indicating whether the step is in training mode; and 5) the hash key value calculated by applying the hash function to the canonical form of the step. It should be understood that other information or information combinations is contemplated to be stored in the database catalog 140, and other such information is within the scope of the description and claims. Similar to a key-value hash map, the query optimizer 110 uses a matching hash value of a canonical form logical step (e.g., the key generated from the canonical form of the logical step) to find the corresponding actual cardinality statistics and/or cost for the logical step in the database catalog 140.

As described herein, in the canonical form, table names and/or column names used by the step are fully-qualified. That is to say, the table names and/or column names include all names in the hierarchic sequence above the given element and the name of the table and/or column itself. Each fully-qualified table name or column name is unique in the schema of its database. Furthermore, the canonical form contains all the dependency logical steps of an execution step. The canonical forms are generated recursively by including all the logical steps on which the current logical step depends.

The canonical forms define keywords and syntax structure for each type of operation. When the step has the commutative property, the terms (e.g., table names) inside the canonical form logical steps are sorted alphabetically to increase the reusability of the step statistics. Operators that have the commutative property may reference the tables in any order. Thus, the system can match a logical step with a canonical form even if the order of some tables is different from the order of the corresponding tables used in previous queries. Although the fully-qualified table names are described as being in alphabetical order, the table names may be organized in a different predetermined order, for example, first by name length and then alphabetically. Any predetermined order may be used as long as it is applied to every query processed by the system 100.

The materials below describe the canonical forms for various operators used in execution steps. Each of the logical steps has a canonical form that follows a defined syntax as described below.

The SCAN operator has the following canonical form:
**SCAN(source[, PREDICATE(filter-expression)])**
The terms SCAN and PREDICATE are keywords and the terms inside [ ] are optional. "Source" can be either a base table (e.g., a column of the database), an intermediate table (e.g., a table resulting from performing a previous operation in the query), or a materialized view. The name of the table is fully qualified.

As an example of the application of the canonical form for the SCAN operator, the query "SELECT * FROM t1 WHERE c1>10" generates the canonical form "SCAN(public.t1, PREDICATE(public.t1.c1 > 10))" where "public" is the name of the database, "t1" is a particular column of the database and "c1" is a variable representing the values in the column public.t1.

The single JOIN operator has the following canonical form:
**JOIN(source1, source2[, PREDICATE(join-condition)])**
The terms SCAN and PREDICATE are keywords and the terms inside [ ] are optional. The JOIN operator can be either inner join (with a join condition) or Cartesian product join (without a join condition). The items "source1" and "souce2" can be either base tables or intermediate tables. Source1 and source2 are in a predetermined sorted order, in an example embodiment, the predetermined order is alphabetical order.

As an example of the application of the canonical form for the JOIN operator, the query "SELECT * FROM t1, t2 WHERE t1.c1=t2.c1 and t1.c1>10" generates the canonical form "JOIN(SCAN(public.t1, PREDICATE(public.t1.c1 > 10)), SCAN(public.t2, PREDICATE(public.t2.c1 > 10)), PREDICATE(public.t1.c1 = public.t2.c1))." Note that the canonical form includes canonical form SCAN operator having the predicate from the query.

The Multi-Way JOIN Operator (also known as the Consecutive JOIN operator) has the following canonical form:
**JOIN(source1, source2, source3, ...[, PREDICATE(join-condition)])**
A Multi-Way JOIN operator can be flattened out (e.g., the sources can be separately specified without regard to the structure of the database that contains the sources) to increase the reusability of the Multi-Way JOIN canonical form. A flattened join canonical form having sorted source names allows the cardinality data to be reused in a future query even when the future query contains a different join order. The Multi-Way JOIN operation may be flattened due to the commutative property of the JOIN operator. (e.g., (A join B) produces the same result as (B join A)). Hence, (A join B join C) has the same canonical form as (B join C join A).

As an example of the application of the canonical form for the Multi-Way JOIN operator, the query SELECT * FROM t1 INNER JOIN t2 ON t1.c1=t2.c1 INNER JOIN t3 ON t1.c1=t3.c1 WHERE t1.c1>10" generates the canonical form "JOIN(SCAN(public.t1, PREDICATE(public.t1.c1 > 10)), SCAN(public.t2, PREDICATE(public.t2.c1 > 10)), SCAN(public.t3, PREDICATE(public.t3.c1 > 10)), PREDICATE(public.t1.c1 = public.t2.c1 AND public.t1.c1 = public.t3.c1))."

The Left Outer JOIN operator has the following canonical form:
**LEFTJOIN(source1, source2[, PREDICATE(join-condition)])**
   LEFTJOIN and PREDICATE are keywords. In a Left Outer JOIN operator, the order of source1 and source2 cannot be changed because the order of these two sources matters in the semantics of the Left Outer JOIN operator. Thus, the Left Outer JOIN operator cannot be flattened out. The canonical form for a Right Outer Join operator (RIGHTJOIN) is similar to the canonical from for a Left Outer JOIN operator. Many query optimizers convert the Right Outer JOIN operator to a Left Outer JOIN operator. As an example of the LEFTJOIN operator, the query "SELECT * FROM t2 LEFT JOIN t1 ON t1.c1=t2.c1" generates the canonical form "LEFTJOIN(SCAN(public.t2), SCAN(public.t1), PREDICATE(public.t1.c1 = public.t2.c1))." Other Join operators have similar canonical forms to the Left Outer JOIN operator. These include the Semi-join operator which has the canonical form:
**SEMIJOIN(source1, source2[, PREDICATE(join-condition)])**
   and the Anti-join operator which has the canonical form:
**ANTIJOIN(source1, source2[, PREDICATE(join-condition)])**
   As with the Left Outer Join operator, the order of source1 and source2 in the SEMIJOIN and ANTIJOIN operators cannot be changed because the order matters in the semantics of the operators.

The Full Outer JOIN operator has the canonical form:
**FULLJOIN(source1, source2[, PREDICATE(join-condition)])**
The order of source1 and source2 in the Full Outer JOIN operator may be changed to be in the predetermined order because the Full Outer JOIN operator has the commutative property.

The Aggregate Group By operator has the canonical form:
**AGGREGATE(source, GROUPBY(columns)[, PREDICATE(having-condition)])**

In this canonical form, the terms AGGREGATE, GROUPBY, and PREDICATE are keywords, "columns" is a list of the columns specified in GROUP BY clause, and the PREDICATE contains a condition specified in HAVING clause. As an example of the Aggregate Group By operator, the query "SELECT customer_id, COUNT(order_id) FROM orders GROUP BY customer_id HAVING COUNT(order_id) > 100" generates the canonical form operator "AGGREGATE(SCAN(public.orders), GROUPBY (public. orders. customer_id), PREDICATE(count(order_id) > 100))".

The Union operator has the canonical form:
**UNION(source1, source2, source3, ...)**
In this canonical form, the term "UNION" is a keyword and the sources can be base tables or intermediate tables. All source names are sorted in the predetermined alphabetical order as the Union operator has the commutative property.

The Intersect operator has the canonical form:
**INTERSECT(source1, source2, source3, ...)**
In this canonical form, the term "INTERSECT" is a keyword and the sources can be base tables or intermediate tables. All source names are sorted in the predetermined alphabetical order as the Intersect operator has the commutative property. In addition, consecutive INTERSECT operations can be combined, sorted, and flattened out to increase reusability.

The operations described above are not all of the operators used in embodiments of the DBMS. Canonical forms for other operators can be generated in a similar way.

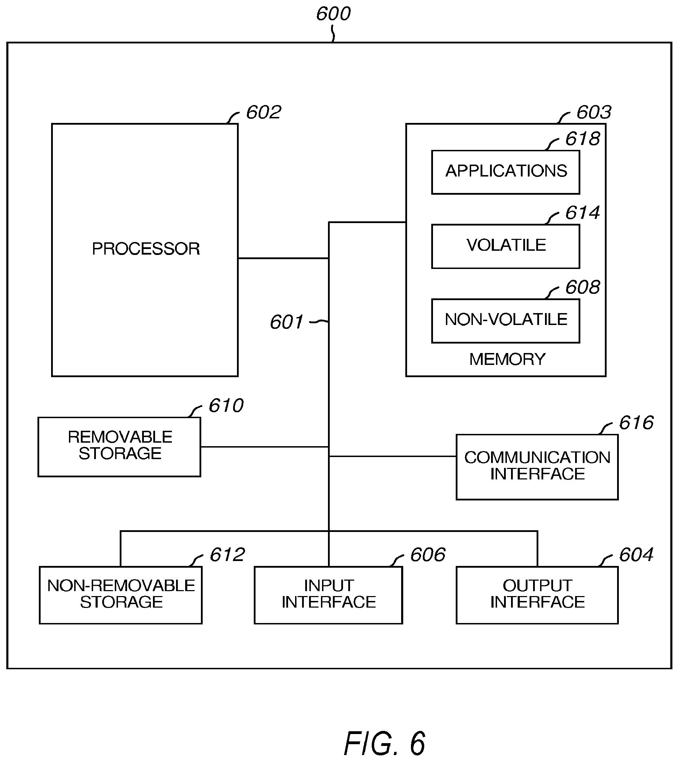

The query optimizer 110 can be implemented by, for example, the computing device 600 described herein with reference to FIG. 6. In some embodiments, the query optimizer 110 comprises a stand-alone unit. Alternatively, in other embodiments the query optimizer 110 includes one or more of the query processor 104, the communication interface 132, the database catalog 140, or the execution engine 150.

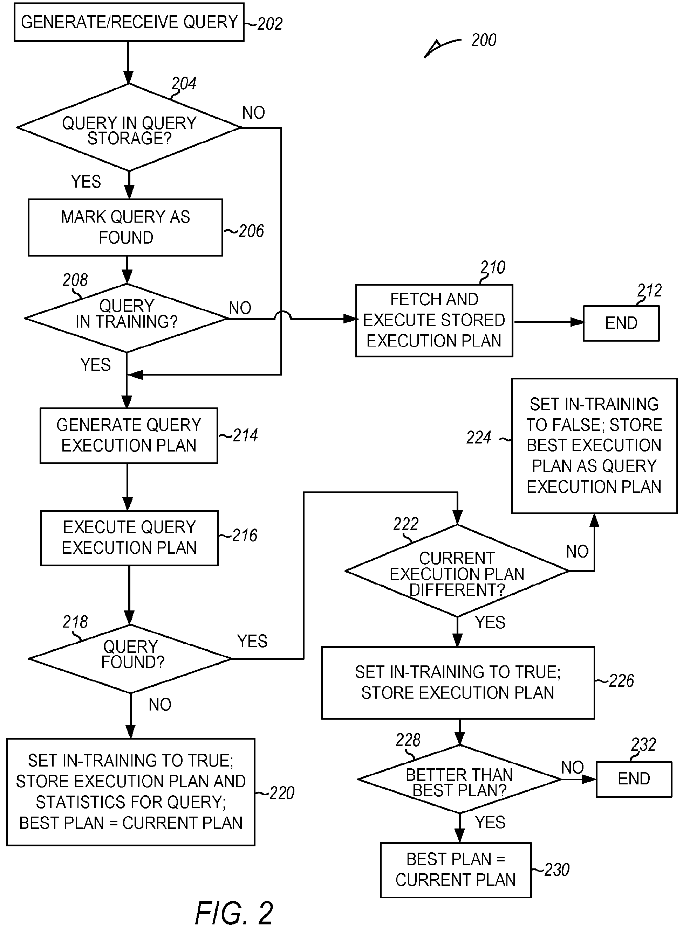

**FIG. 2** is a flowchart of a query caching method 200 according to an example embodiment. Method 200 identifies a best execution plan encountered while a query is in a training mode. During the training period, the query processor 104 generates new query trees 112 for a query. The logical level optimizer 114 and cost-based optimizer 120 generate new execution plans for each query tree generated for the query. The optimizers 114 and 120 generate the execution plans based on previously collected statistics for steps in the query tree and/or estimated statistics for steps that have not previously been executed. A query having N relations has a number of iterations on the order of 2^{N} (i.e., O(2^{N})). Method 200 iterates through the possible execution plans for the query until there is no difference between a current execution plan and the immediately previous execution plan. Method 200 may store (or cache) each developed execution plan. As each execution plan is executed, the method 200 determines or updates a cost of the current execution plan and compares the cost of the current execution plan to the cost of a best execution plan. When the cost of the current execution plan is lower, the method 200 identifies the current execution plan as the best execution plan. Although the number of possible execution plans is O(2^{N}), the method 200 typically finds an execution plan that is better than any other execution plan in fewer iterations than the possible number of iterations.

For each query execution plan processed, the entry for the query in the query storage 142 stores the following information: 1) the query statement having fully qualified tables and/or columns; 2) the compiled current best execution plan; 3) the cost for the current best execution plan; 4) a Boolean value indicating whether the query is in training mode; 5) the hash key value calculated by applying the hash function to the query statement having fully qualified table and/or column names; and 6) the most recent compiled execution plan for the query.

At operation 202, the method 200 receives and/or generates a database query. Operation 204 generates a hash value for the query and uses the hash value to determine whether the query has an entry in the query storage 142. When the query does not have an entry in the query storage 142, method 200 passes control to operation 214 to generate a query execution plan, as described herein. When the query does have an entry in the query storage 142, operation 206 marks the query as having been found in the query storage 142. Next, operation 208 determines whether the query is in a training mode. When the query is not in training mode, the method 200 has determined and cached a low-cost execution plan for the query as described herein. In this instance operation 210 fetches and executes the stored execution plan. After operation 210, method 200 ends at operation 212.

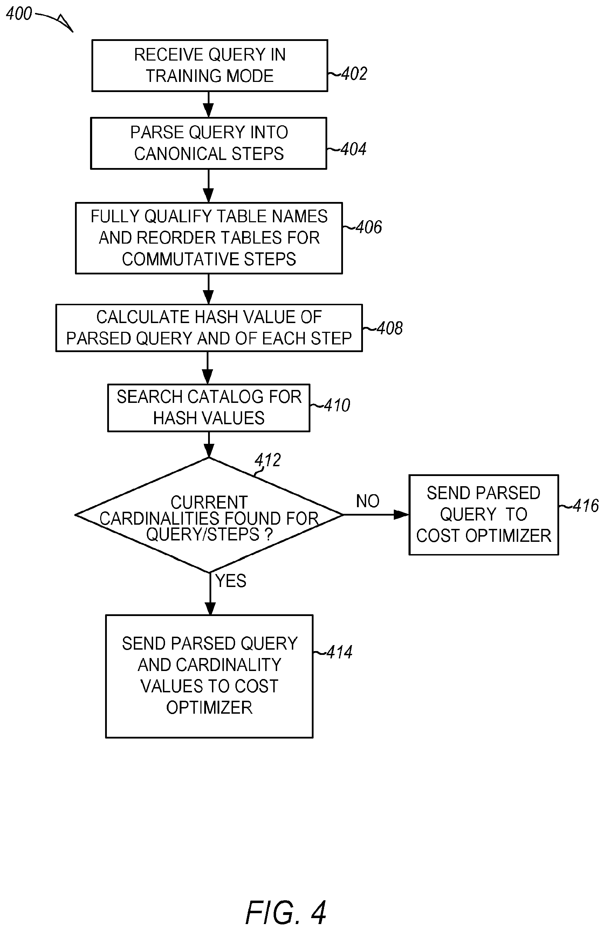

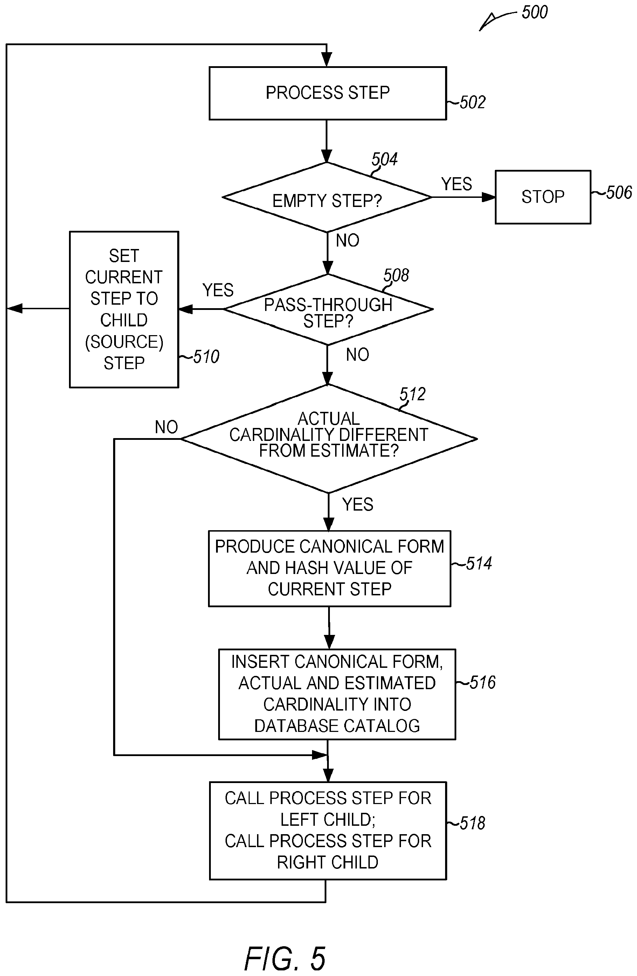

When operation 208 determines that the query is in a training mode, the next step is to generate a query execution plan at operation 214. Operation 214 is described in more detail below with reference to FIG. 4, according to an example embodiment. After operation 214 generates the execution plan, operation 216 executes the query plan and measures the cost of the execution. Operation 216 is described in more detail below with reference to FIG. 5, according to an example embodiment. One measure of the cost of an execution plan is the time spent in operation 216. Thus, a cost for the execution plan may be obtained by resetting a timer at the start of operation 216 and reading the timer at the end of operation 216 as the cost value. After operation 216 executes the execution plan, operation 218 determines whether the query was marked as found in the query storage 142 by operation 206. When the query was not marked as found by operation 206, this is the first execution of the query by the DBMS. Accordingly, operation 220 sets the in-training value for the query to TRUE and stores the execution plan for the query in the query storage 142 indexed by the hash value calculated by operation 204. The execution plan is stored as the current best execution plan and as the most recent execution plan.

When operation 218 determines that the query was found in the query storage 142 by operation 204, this is not the first instance of the query and the query is in training mode. Operation 222 compares the current compiled execution plan to the most recent compiled execution plan stored for the query. When these execution plans are the same, operation 224 sets the in-training value for the query to FALSE and marks the stored current best execution plan for the query, as stored in the entry for the query in the query storage 142, as the execution plan to be used for future instances of the query. Future instances will not have a compilation phase but will retrieve this execution plan from the query storage 142 and execute it.

When operation 222 determines that the current execution plan is different from the most recent compiled execution plan stored in the query storage 142 for the query, operation 226 sets the in-training value for the query to TRUE and stores the current compiled execution plan as the most recent compiled execution plan. Next, operation 228 determines whether the cost of the current compiled execution plan is less than the cost of the best execution plan stored in the query storage 142 for the query. When the cost of the current plan is better than the cost of the best plan, operation 230 replaces the best plan for the query in the query storage 142 with the current plan. When the cost of the current plan is not better than cost of the best plan, operation 228 branches to operation 232 to end the method 200.

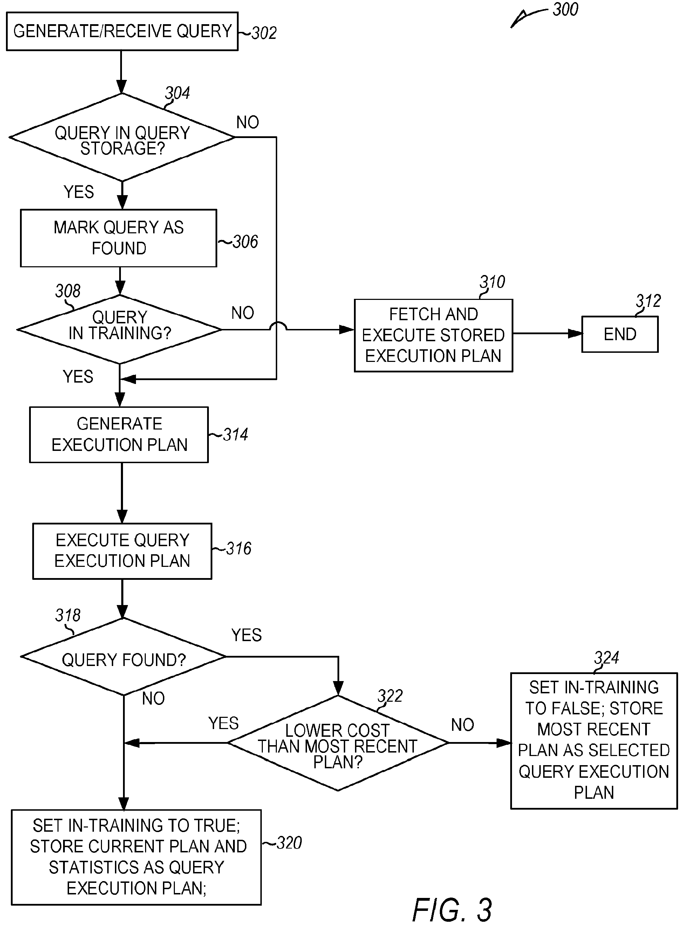

**FIG. 3** is a flowchart of a query caching method 300 according to another example embodiment. The method 300 uses a greedy convergence criterion to identify, while the query is in training mode, a best execution plan from among multiple execution plans executed. The method 300 generates new execution plans for the query until the cost of the current execution plan is greater than the cost of the most recent execution plan. The in-training value for the query is then set to FALSE and the most recent execution plan is identified as the execution plan for future instances of the query. Method 300 assumes that the generated execution plans have monotonically decreasing costs. This assumption is reasonable as each successive execution plan is generated from more information about the query and its sources than was available for the previous execution plan.

For each query execution plan processed, the method 300 stores the following information in the query storage 142: 1) the query statement having fully qualified table and/or column names; 2) the compiled most recent execution plan; 3) the cost for the most recent execution plan; 4) a Boolean value indicating whether the query is in training mode; and 5) the hash key value calculated by applying the hash function to the query statement having fully qualified table and/or column names.

At operation 302, the method 300 generates and/or receives a database query. Operation 304 generates a hash value for the query and determines whether the query has an entry in the query storage 142. When the query does not have an entry in the query storage 142, method 300 passes control to operation 314 to generate a query execution plan, as described below. When the query does have an entry in the query storage 142, operation 306 marks the query as having been found in the query storage 142. Next, operation 308 determines whether the query is in training mode. When the query is not in training mode, method 300 fetches and executes the stored execution plan at operation 310. After operation 310, method 300 ends at operation 312.

When operation 308 determines that the query is in training mode, operation 314 generates a query execution plan. Operation 314 is the same as operation 214 shown in FIG. 2 and an example embodiment is described in more detail below with reference to FIG. 4. After operation 314 generates the execution plan, operation 316 executes the query plan and calculates the cost of the execution. Operation 316 is the same as operation 216 shown in FIG. 2 and an example embodiment is described in more detail below with reference to FIG. 5. As with operation 216, the cost of the query may be determined from the duration of operation 316. After operation 316 executes the execution plan, operation 318 determines whether the query was marked as found in the query storage 142 by operation 306. When the query was not marked as found by operation 306, this is the first execution of the query by the DBMS. Accordingly, operation 320 sets the in-training value for the query to TRUE and stores the execution plan for the query in the query storage 142 indexed by the hash value calculated by operation 204. The execution plan is stored as the most recent execution plan.

When operation 318 determines that the operation 304 found the query in the query storage 142, operation 322 compares the execution cost of the current execution plan with the stored cost of the most recent execution plan. If the cost of the current plan is lower than the cost of the most recent execution plan, operation 322 branches to operation 320 which stores the execution plan query in the query storage 142 as the most recent execution plan. When operation 322 determines that the cost of the current execution plan is not less than the stored cost of the most recent execution plan, the method 300 has found the lowest cost execution plan of the executed execution plans. At operation 324, the method 300 sets the in-training value for the query to FALSE and stores the most recent execution plan (e.g., the plan executed immediately before the current execution plan) as the execution plan to be used for future instances of the query.

After method 200 or method 300 has transitioned a query out of training mode, the system 100 uses the stored execution plan for the query for multiple subsequent occurrences of the query. The amount of time that this may be used depends on the rate-of-change of the data that it references. A database manager may periodically put a query back into training mode to ensure that a low-cost plan is available. The length of this period depends on the rate at which the data changes. To reduce the time to converge upon a new execution plan, the system 100 may simply set the in-training value to TRUE, allowing the method 200 or 300 to find a better execution plan based on the current execution plan. Alternatively, the system 100 may delete the entry for the query from the query storage 142 so that the system 100 generates the execution plan without using any previous execution plans.

**FIG. 4** is a flowchart of a query processing method 400 for a query in training mode to generate an execution plan according to an example embodiment. The method 400 may be used in operations 214 and 314, as described herein and may be performed by the query processor 104 and logical-level optimizer 114 shown in FIG. 1. The method 400 generates execution plans having multiple steps, each of which has a canonical form and fully qualified table names. In steps having the commutative property, the fully qualified table names are arranged in a predetermined order. Due to the use of the canonical form steps, multiple instances of a query will generate at least some of the same execution plans.

It is contemplated, however, that other query processing methods may be used which do not employ steps having canonical forms or ordered table names. For example, it is desirable for the same query occurring multiple times to produce the same query hash value so that data on previous instances of the query may be retrieved from the query storage 142. This may be implemented, for example, by limiting users to predetermined query templates such that only the table names and predicates can be changed. In this instance, multiple instances of the query template referencing the same table names and predicates generate the same hash value and, thus, can be mapped to the same query entry in the query storage 142.

Referring to FIG. 4, method 400, at operation 402, receives the query that is in training mode. Operation 404 parses the query into one or more execution plans (e.g., first and second execution plans) having canonical-form logical steps, as described herein. At operation 406, the method 400 fully qualifies the table names and, for operators having the commutative property, reorders the table names in the predetermined order. At operation 408, the method 400 calculates respective hash values for each execution plan and subsets of each execution plan, including respective hash values for the individual logical steps. Operation 410 searches the database catalog 140 for the cardinality values based on the calculated hash values. Operation 412 determines whether cardinalities have been found for the parsed execution plan or any of its subparts and whether the cardinality values have current timestamps. If operation 412 determines that current cardinalities have been found, operation 414 passes on the parsed query with the found cardinality values and, optionally, the hash values of the execution plans and their sub-parts for cost optimization. If operation 412 determines that no cardinalities were found, or that the cardinalities which were found have older timestamps (indicating that they are likely to be unreliable), then operation 416 sends only the parsed execution plan for cost optimization. As described herein, based on retrieved and estimated cardinalities, the cost optimizer may select one of the execution plans (e.g., the first or second execution plan) as the plan to use for the current iteration.

**FIG. 5** is a flowchart of a query execution method 500 according to another example embodiment. Method 500 may be implemented in execution engine 150, shown in FIG. 1. The method 500 comprises a recursive query processing method in some embodiments. The method 500 executes the steps of the execution plan. As described herein, the execution plan may be in the form of a tree. The root of the tree is the overall query and the branches are sub-parts of the tree. The leaves of the tree are fundamental operations, for example the SCAN operations described above. The method 500 begins at operation 502, processing the root step in the execution plan on a first pass. Operation 502 executes the step on data in the database. At operation 504, the method 500 determines whether the current step is an empty step, which occurs when the previous step was a leaf step that has no child steps. If the current step is a leaf step, the method 500 ends at operation 506. When operation 504 determines that the current step is not an empty step, the method 500 executes operation 508 to determine whether the current step is a pass-through step. A pass-through step is a step in the execution plan that is not affected by cardinality. Example non-pass-through steps include, without limitation, SCAN, JOIN, AGGREGATE, UNION, INTERSECT, MINUS, and LIMIT. These steps are sensitive to the cardinality and/or size of the data being processed. Example pass-through steps include, without limitation, SORT, window functions (e.g., SUM, COUNT, AVG), and REDISTRIBUTE. These steps are not sensitive to data cardinality and/or size. When operation 508 determines that the current step is a pass-through step, operation 510 sets the current step to the child of the pass-through step and branches back to operation 502 to process a new current step.

When operation 508 determines that the current step is not a pass-through step, then the method 500 processes the cardinality data. At operation 512, the method 500 determines whether the actual cardinality data determined when the step was executed at operation 502 is different from the estimated cardinality. The estimated cardinality may be included with the execution plan or may be obtained from a database catalog 140, for example. When there is no difference between the actual and estimated cardinality values, method 500 passes control to operation 518, described below, which recursively invokes the method 500 for the two sub-trees of the current step.

When operation 512 determines that the actual cardinality determined at operation 502 is different from the cardinality estimate stored in the database catalog 140 or received with the query execution plans, operation 514 produces the canonical form and the hash value of the current step. Operation 514 may produce these values from the execution plan or may reproduce the canonical form for the step using the rules described herein. Similarly, the hash value may be received with the execution plan or may be computed from the canonical form of the step. At operation 516, the actual and estimated cardinalities of the step are stored in the database catalog, indexed by the hash value.

After operation 516, or after operation 512, if the cardinality of the step is the same as the estimated cardinality, operation 518 invokes the method 500 for the left and right child steps of the current step. This is indicated by the branch from operation 518 to operation 502.

As an alternative to the method described above, operation 518 may occur immediately before operation 502, causing the method to recursively invoke the method until the leaves of the query tree are encountered. The method processes the leaves to generate intermediate results which are passed back to the higher-level invocations of the method to be processed according to the branches of the query tree. This continues until the logical step at the root node is processed using the intermediate results generated by its child logical steps.

**FIG. 6** is a block diagram of a computing device 600 for performing query processing according to an example embodiment. In some embodiments, the computing device 600 implements the query processor 104, query optimizer 110, execution engine 150, and communication interface 132 of FIG. 1. All components need not be used in various embodiments. For example, the clients, servers, and network resources may each use a different set of components, or in the case of servers, larger storage devices.

The computing device 600 may include a processor 602, memory 603, removable storage 610, and non-removable storage 612. The computing device 600 may be in different forms in different embodiments. For example, the computing device 600 may instead be any computing device configured to maintain a database. Further, although the various data storage elements are illustrated as part of the computing device 600, the storage 610 may also or alternatively include cloud-based storage accessible via a network (not shown), such as the Internet, or server-based storage accessed via a local area network (LAN).

Memory 603 may include volatile memory 614 and non-volatile memory 608. The computing device 600 may include (or have access to a computing environment that includes) a variety of computer-readable media, such as volatile memory 614 and non-volatile memory 608, removable storage 610 and non-removable storage 612. Computer storage includes random access memory (RAM), read only memory (ROM), erasable programmable read-only memory (EPROM), electrically erasable programmable read-only memory (EEPROM), flash memory or other memory technologies, compact disc read-only memory (CD ROM), digital versatile disks (DVD) or other optical disk storage, magnetic cassettes, magnetic tape, magnetic disk storage or other magnetic storage devices, or any other medium capable of storing computer-readable instructions.

The computing device 600 may include or have access to a computing environment that includes input interface 606, output interface 604, and a communication interface 616. Output interface 604 may provide an interface to a display device, such as a touchscreen, that also may serve as an input device. The input interface 606 may provide an interface in the form of a touchscreen, touchpad, mouse, keyboard, camera, one or more device-specific buttons, one or more sensors integrated within or coupled via wired or wireless data connections to the computing device 600, and/or other input devices. The computing device 600 may operate in a networked environment using a communication interface 616 to connect to one or more network nodes or remote computers, such as database servers. The remote computer may include a personal computer (PC), server, router, network PC, a peer device or other common network node, or the like. The communication interface 616 may include an interface to a local area network (LAN), a wide area network (WAN), cellular, a Wi-Fi network, and/or a Bluetooth^{®} network, for example. The communication interface 616 may correspond to the communication interface 132, shown in FIG. 1.

Computer-readable instructions stored on a computer-readable medium (such as an application or applications 618) are executable by the processor 602 of the computing device 600. A hard drive, CD-ROM, RAM, and flash memory are some examples of articles including a non-transitory computer-readable medium such as a storage device. The terms computer-readable medium and storage device do not include carrier waves to the extent carrier waves are deemed too transitory.

The functions or algorithms described herein may be implemented using software in one embodiment. The software may consist of computer-executable instructions stored on computer-readable media or computer-readable storage device such as one or more non-transitory memories or other type of hardware-based storage devices, either local or networked, such as in application 618. A device according to embodiments described herein implements software or computer instructions to perform query processing, including DBMS query processing. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine.

A query processing device may be implemented in the system 100 or the computing device 600. In some examples the query processing devices comprises a communication interface 132 to a database 130 and a query storage 142, a memory 603 storing instructions, and a processor 602 coupled to the memory 603 and to database 130, and query storage 142. The processor 602 executes the instructions (e.g.., the application(s) 618) to receive a current submission of a query, determine that the query is in training mode and that a prior execution plan and statistics for the prior execution plan are stored in the query storage 142, generate a current execution plan for the query, execute the current plan on data in the database 130, and collect statistics for the current execution plan; store the current execution plan and the statistics for the current execution plan in the query storage 142; determine, based on the current execution plan and the prior execution plan that the query is not in training mode, select an execution plan for the query from among a plurality of execution plans for the query, including the prior execution plan and the current execution plan, stored in the query storage 142, and store the selected execution plan for the query in the query storage 142 with an indication that the query is not in training mode.

An apparatus such as the system 100 or computing device 600 for processing queries in some examples comprises means 102 for receiving a current submission of a query, means 114 for determining that the query is in training mode and that a prior execution plan and statistics for the prior execution plan were stored as a result of a prior submission of the query, means 114, 124 for generating a current execution plan for the query, means 150 for executing the current execution plan, means 150 for collecting statistics for the current execution plan during the execution of the current execution plan, means 142 for storing the current execution plan and the statistics for the current execution plan, means 124 for determining, based on the current execution plan and the prior execution plan, that the query is not in training mode, means 124 for selecting an execution plan for the query from among a plurality of stored execution plans for the query, including the prior execution plan and the current execution plan, and means 142 for storing the selected execution plan for the query with an indication that the query is not in training mode.

The query processing device is implemented as the computing device 600 in some embodiments. The query processing device is implemented as a database management system (DBMS) query processing device in some embodiments.

Although a few embodiments have been described in detail herein, other modifications are possible. For example, the logic flows depicted in the figures do not require the particular order shown, or sequential order, to achieve desirable results. Other steps may be provided, or steps may be eliminated, from the described flows, and other components may be added to, or removed from, the described system: The invention is defined by the attached claims.

## Claims

1. A query processing method (200, 300) comprising:
receiving (202, 302) a query;
generating a hash value for the query and use the hash value to determine (204, 304) whether the query has an entry in a query storage; and
determining (208, 308) if the query is in a training mode and that a prior execution plan and prior execution plan statistics were stored in the query storage for a prior submission of the query, wherein the prior execution plan is a last executed execution plan for the query;
wherein, when it is determined that the query is in the training mode, the method (200, 300) further comprises:
generating (214, 314) a current execution plan for the query;
executing (216, 316) the current execution plan and collecting current execution plan statistics; and
storing the current execution plan and the current execution plan statistics in the query storage;
wherein, when the query was found in the query storage, the method (200, 300) further comprises either:
determining (222) if the current execution plan is identical to the prior execution plan, when the current execution plan is identical to the prior execution plan, storing (224) an indication that the query is not in the training mode along with the prior execution plan as the current best execution plan to be used for future instances of the query, and, when the current execution plan is different from the prior execution plan, storing (226) the current execution plan as the last execution plan and an indication that the query is in the training mode, determining (228) whether a cost of the current execution plan is less than a cost of the stored current best execution plan for the query, and, when the cost of the current execution plan is lower than the cost of the stored current best execution plan for the query, replacing (230) the stored current best execution plan for the query in the query storage with the current execution plan; or
comparing (322) the cost of the current execution plan with a cost of the prior execution plan, if the cost of the current execution plan is lower than the cost of the prior execution plan, storing (320) the execution plan in the query storage as the last execution plan and the indication that the query is in the training mode, and, when the cost of the current execution plan is not less than the cost of the prior execution plan, storing (324) the indication that the query is not in the training mode along with the prior execution plan as the execution plan to be used for future instances of the query,
wherein, when it is determined that the query is not in the training mode, the method (200, 300) further comprises:
fetching and executing the stored execution plan.

2. The query processing method (200, 300) of claim 1, further comprising:
receiving a first submission of the query;
determining that no stored execution plans exist for the first submission of the query;
generating a first execution plan for the first submission of the query based on an estimate of a cost of executing the query;
executing the first execution plan and collecting statistics for the first execution plan; and
storing the first execution plan and the first execution plan statistics.

3. The query processing method (200, 300) of claim 1, wherein generating (214, 314) the current execution plan includes:
generating multiple steps for the current execution plan;
retrieving statistics for each of the multiple steps having stored statistics;
generating estimated statistics for each of the multiple steps that do not have stored statistics; and
producing an estimated cost for the current execution plan based on the retrieved statistics and the estimated statistics.

4. A query processing device (600) comprising:
a communication interface (616) configured to communication with a database and a query storage;
a memory (603) storing instructions; and
a processor (602) coupled to the communication interface (616) and the memory (603), the processor (602) executing the instructions to:
receive (202, 302) a query;
generate a hash value for the query and use the hash value to determine (204, 304) whether the query has an entry in a query storage; and
determine (208, 308) if the query is in a training mode and that a prior execution plan and prior execution plan statistics are stored in the query storage for a prior submission of the query, wherein the prior execution plan is a last executed execution plan;
wherein, when it is determined that the query is in the training mode, the processor (602) further executes the instructions to:
generate (214, 314) a current execution plan for the query;
execute (216, 316) the current execution plan and collect current execution plan statistics; and
store the current execution plan and the current execution plan statistics in the query storage;
wherein, when the query was found in the query storage, the processor (602) further executes the instructions either to:
determine (222) if the current execution plan is identical to the prior execution plan, when the current execution plan is identical to the prior execution plan, store (224) an indication that the query is not in the training mode along with the prior execution plan as the current best execution plan to be used for future instances of the query, and, when the current execution plan is different from the prior execution plan, store (226) the current execution plan as the last execution plan and an indication that the query is in the training mode, determine (228) whether a cost of the current execution plan is less than a cost of the stored current best execution plan for the query, and, when the cost of the current execution plan is lower than the cost of the stored current best execution plan for the query, replace (230) the stored current best execution plan for the query in the query storage with the current execution plan; or
compare (322) the cost of the current execution plan with a cost of the prior execution plan, if the cost of the current execution plan is lower than the cost of the prior execution plan, store (320) the execution plan in the query storage as the last execution plan and the indication that the query is in the training mode, and, when the cost of the current execution plan is not less than the cost of the prior execution plan, store (324) the indication that the query is not in the training mode along with the prior execution plan as the execution plan to be used for future instances of the query,
wherein, when it is determined that the query is not in the training mode, the processor (602) further executes the instructions to:
fetch and execute (310) the stored execution plan.

5. The query processing device (600) of claim 4, wherein the processor (602) further executes the instructions to:
receive a first submission of the query;
determine that no execution plans for the first submission of the query are stored in the query storage;
generate a first execution plan for the first submission of the query based on an estimate of a cost of executing the query;
execute the first execution plan and collect first execution plan statistics;
generate a hash value for the query; and
store the first execution plan and the first execution plan statistics in the query storage indexed by the hash value.

6. The query processing device (600) of claim 4, wherein the processor (602) further executes the instructions to:
generate multiple steps for the current execution plan;
generate respective hash values for the multiple steps;
retrieve statistics from the query storage for each of the multiple steps having stored statistics, using the respective hash values as an index;
generate estimated statistics for each of the multiple steps that do not have stored statistics; and
produce an estimated cost for the current execution plan based on the retrieved statistics and the generated estimated statistics.

7. A computer-readable medium including instructions that, when executed by one or more processors, configure the one or more processors to perform the method according to any one of claims 1-3.

8. A computer program product including instructions that, when executed by a computer, cause the computer to perform the method according to any one of claims 1-3.

## Patentansprüche

1. Abfrageverarbeitungsverfahren (200, 300), umfassend:
Empfangen (202, 302) einer Abfrage;
Erzeugen eines Hash-Werts für die Abfrage und Verwenden des Hash-Werts zum Bestimmen (204, 304), ob die Abfrage einen Eintrag in einer Abfragespeicherung aufweist; und
Bestimmen (208, 308), ob sich die Abfrage in einem Trainingsmodus befindet und dass ein vorheriger Ausführungsplan und vorherige Ausführungsplanstatistiken in der Abfragespeicherung für eine vorherige Einreichung der Abfrage gespeichert wurden, wobei der vorherige Ausführungsplan ein zuletzt ausgeführter Ausführungsplan für die Abfrage ist;
wobei, wenn bestimmt wird, dass sich die Abfrage in dem Trainingsmodus befindet, das Verfahren (200, 300) ferner Folgendes umfasst:
Erzeugen (214, 314) eines aktuellen Ausführungsplans für die Abfrage;
Ausführen (216, 360) des aktuellen Ausführungsplans und Sammeln von aktuellen Ausführungsplanstatistiken; und
Speichern des aktuellen Ausführungsplans und der aktuellen Ausführungsplanstatistiken in der Abfragespeicherung;
wobei, wenn die Abfrage in der Abfragespeicherung gefunden wurde, das Verfahren (200, 300) ferner Folgendes umfasst:
Bestimmen (222), ob der aktuelle Ausführungsplan mit dem vorherigen Ausführungsplan identisch ist, wenn der aktuelle Ausführungsplan mit dem vorherigen Ausführungsplan identisch ist, Speichern (224) einer Angabe, dass sich die Abfrage nicht im Trainingsmodus befindet, zusammen mit dem vorherigen Ausführungsplan als den besten für zukünftige Instanzen der Abfrage zu verwendenden Ausführungsplan, und wenn der aktuelle Ausführungsplan von dem vorherigen Ausführungsplan verschieden ist, Speichern (226) des aktuellen Ausführungsplans als den letzten Ausführungsplan und einer Angabe, dass sich die Abfrage in dem Trainingsmodus befindet, Bestimmen (228), ob Kosten des aktuellen Ausführungsplans kleiner als Kosten des gespeicherten aktuellen besten Ausführungsplans für die Abfrage sind, und wenn Kosten des aktuellen Ausführungsplans kleiner als Kosten des gespeicherten aktuellen besten Ausführungsplans für die Abfrage sind, Ersetzen (230) des gespeicherten aktuellen besten Ausführungsplans für die Abfrage in der Abfragespeicherung mit dem aktuellen Ausführungsplan; oder
Vergleichen (322) der Kosten des aktuellen Ausführungsplans mit Kosten des vorherigen Ausführungsplans, wenn die Kosten des aktuellen Ausführungsplans kleiner als die Kosten des vorherigen Ausführungsplans sind, Speichern (320) des Ausführungsplans in der Abfragespeicherung als den letzten Ausführungsplan und der Angabe, dass sich die Abfrage im Trainingsmodus befindet, und wenn die Kosten des aktuellen Ausführungsplans nicht kleiner als die Kosten des vorherigen Ausführungsplans sind, Speichern (324) der Angabe, dass sich die Abfrage nicht im Trainingsmodus befindet, zusammen mit dem vorherigen Ausführungsplan als den für zukünftige Instanzen der Abfrage zu verwendenden Ausführungsplan,
wobei, wenn bestimmt wird, dass sich die Abfrage nicht im Trainingsmodus befindet, das Verfahren (200, 300) ferner Folgendes umfasst:
Abrufen und Ausführen des gespeicherten Ausführungsplans.

2. Abfrageverarbeitungsverfahren (200, 300), nach Anspruch 1, ferner umfassend:
Empfangen einer ersten Einreichung der Abfrage;
Bestimmen, dass es keine gespeicherten Ausführungspläne für die erste Einreichung der Abfrage gibt;
Erzeugen eines ersten Ausführungsplans für die erste Einreichung der Abfrage auf der Basis einer Schätzung von Kosten des Ausführens der Abfrage;
Ausführen des ersten Ausführungsplans und Sammeln von Statistiken für den ersten Ausführungsplan; und
Speichern des ersten Ausführungsplans und der ersten Ausführungsplanstatistiken.

3. Abfrageverarbeitungsverfahren (200, 300), nach Anspruch 1, wobei Erzeugen (214, 314) des aktuellen Ausführungsplans Folgendes umfasst:
Erzeugen mehrerer Schritte für den aktuellen Ausführungsplan;
Abrufen von Statistiken für jeden der mehreren Schritte, die gespeicherte Statistiken aufweisen;
Erzeugen von geschätzten Statistiken für jeden der mehreren Schritte, die keine gespeicherten Statistiken aufweisen; und
Produzieren geschätzter Kosten für den aktuellen Ausführungsplan auf der Basis der abgerufenen Statistiken und der geschätzten Statistiken.

4. Abfrageverarbeitungsvorrichtung (600), umfassend:
eine Kommunikationsschnittstelle (616), ausgelegt für Kommunikation mit einer Datenbank und einer Abfragespeicherung;
einen Speicher (603), der Anweisungen speichert; und
einen mit der Kommunikationsschnittstelle (616) und dem Speicher (603) gekoppelten Prozessor (602), wobei der Prozessor (602) die Anweisungen ausführt zum Empfangen (202, 302) einer Abfrage;
Erzeugen eines Hash-Werts für die Abfrage und Verwenden des Hash-Werts zum Bestimmen (204, 304), ob die Abfrage einen Eintrag in einer Abfragespeicherung aufweist; und
Bestimmen (208, 308), ob sich die Abfrage in einem Trainingsmodus befindet und dass ein vorheriger Ausführungsplan und vorherige Ausführungsplanstatistiken in der Abfragespeicherung für eine vorherige Einreichung der Abfrage gespeichert wurden, wobei der vorherige Ausführungsplan ein zuletzt ausgeführter Ausführungsplan für die Abfrage ist;
wobei, wenn bestimmt wird, dass sich die Abfrage in dem Trainingsmodus befindet, der Prozessor (602) ferner die Anweisungen ausführt zum
Erzeugen (214, 314) eines aktuellen Ausführungsplans für die Abfrage;
Ausführen (216, 316) des aktuellen Ausführungsplans und Sammeln von aktuellen Ausführungsplanstatistiken; und
Speichern des aktuellen Ausführungsplans und der aktuellen Ausführungsplanstatistiken in der Abfragespeicherung;
wobei, wenn die Abfrage in der Abfragespeicherung gefunden wurde, der Prozessor (602) ferner die Anweisungen ausführt zum
Bestimmen (222), ob der aktuelle Ausführungsplan mit dem vorherigen Ausführungsplan identisch ist, wenn der aktuelle Ausführungsplan mit dem vorherigen Ausführungsplan identisch ist, Speichern (224) einer Angabe, dass sich die Abfrage nicht im Trainingsmodus befindet, zusammen mit dem vorherigen Ausführungsplan als den besten für zukünftige Instanzen der Abfrage zu verwendenden Ausführungsplan, und wenn der aktuelle Ausführungsplan von dem vorherigen Ausführungsplan verschieden ist, Speichern (226) des aktuellen Ausführungsplans als den letzten Ausführungsplan und einer Angabe, dass sich die Abfrage in dem Trainingsmodus befindet, Bestimmen (228), ob Kosten des aktuellen Ausführungsplans kleiner als Kosten des gespeicherten aktuellen besten Ausführungsplans für die Abfrage sind, und wenn Kosten des aktuellen Ausführungsplans kleiner als Kosten des gespeicherten aktuellen besten Ausführungsplans für die Abfrage sind, Ersetzen (230) des gespeicherten aktuellen besten Ausführungsplans für die Abfrage in der Abfragespeicherung mit dem aktuellen Ausführungsplan; oder
Vergleichen (322) der Kosten des aktuellen Ausführungsplans mit Kosten des vorherigen Ausführungsplans, wenn die Kosten des aktuellen Ausführungsplans kleiner als die Kosten des vorherigen Ausführungsplans sind, Speichern (320) des Ausführungsplans in der Abfragespeicherung als den letzten Ausführungsplan und der Angabe, dass sich die Abfrage im Trainingsmodus befindet, und wenn die Kosten des aktuellen Ausführungsplans nicht kleiner als die Kosten des vorherigen Ausführungsplans sind, Speichern (324) der Angabe, dass die sich Abfrage nicht im Trainingsmodus befindet, zusammen mit dem vorherigen Ausführungsplan als den für zukünftige Instanzen der Abfrage zu verwendenden Ausführungsplan,
wobei, wenn bestimmt wird, dass sich die Abfrage nicht im Trainingsmodus befindet, der Prozessor (602) ferner die Anweisungen ausführt zum
Abrufen und Ausführen (310) des gespeicherten Ausführungsplans.

5. Abfrageverarbeitungsvorrichtung (600) nach Anspruch 4, wobei der Prozessor (602) ferner die Anweisungen ausführt zum
Empfangen einer ersten Einreichung der Abfrage;
Bestimmen, dass keine Ausführungspläne für die erste Einreichung der Abfrage in der Abfragespeicherung gespeichert sind;
Erzeugen eines ersten Ausführungsplans für die erste Einreichung der Abfrage auf der Basis einer Schätzung von Kosten für das Ausführen der Abfrage;
Ausführen des ersten Ausführungsplans und Sammeln von ersten Ausführungsplanstatistiken;
Erzeugen eines Hash-Werts für die Abfrage; und
Speichern des ersten Ausführungsplans und der ersten Ausführungsplanstatistiken in der Abfragespeicherung, indexiert durch den Hash-Wert.

6. Abfrageverarbeitungsvorrichtung (600) nach Anspruch 4, wobei der Prozessor (602) ferner die Anweisungen ausführt zum
Erzeugen mehrerer Schritte für den aktuellen Ausführungsplan;
Erzeugen jeweiliger Hash-Werte für die mehreren Schritte;
Abrufen von Statistiken von der Abfragespeicherung für jeden der mehreren Schritte, die gespeicherte Statistiken aufweisen, unter Verwendung der jeweiligen Hash-Werte als Index;
Erzeugen von geschätzten Statistiken für jeden der mehreren Schritte, die keine gespeicherten Statistiken aufweisen; und
Produzieren geschätzter Kosten für den aktuellen Ausführungsplan auf der Basis der abgerufenen Statistiken und der erzeugten geschätzten Statistiken.

7. Computerlesbares Medium mit Anweisungen, die, wenn sie durch einen oder mehrere Prozessoren ausgeführt werden, den einen oder die mehreren Prozessoren dafür auslegen, das Verfahren nach einem der Ansprüche 1-3 auszuführen.

8. Computerprogrammprodukt mit Anweisungen, die, wenn sie durch einen Computer ausgeführt werden, bewirken, dass der Computer das Verfahren nach einem der Ansprüche 1-3 ausführt.

## Revendications

1. Procédé de traitement de requêtes (200, 300) comprenant :
la réception (202, 302) d'une requête ;
la génération d'une valeur de hachage pour la requête et l'utilisation de la valeur de hachage pour déterminer (204, 304) si la requête a une entrée dans un stockage de requêtes ; et
la détermination (208, 308) si la requête est dans un mode d'entraînement et qu'un plan d'exécution antérieur et des statistiques de plan d'exécution antérieure ont été stockés dans le stockage de requêtes pour une soumission antérieure de la requête, le plan d'exécution antérieur étant un dernier plan d'exécution exécuté pour la requête ;
lorsqu'il est déterminé que la requête est dans le mode d'entraînement, le procédé (200, 300) comprenant en outre :
la génération (214, 314) d'un plan d'exécution courant pour la requête ;
l'exécution (216, 316) du plan d'exécution courant et la collecte de statistiques de plan d'exécution courant ; et
le stockage du plan d'exécution courant et des statistiques de plan d'exécution courant dans le stockage de requêtes ;
lorsque la requête a été trouvée dans le stockage de requêtes, le procédé (200, 300) comprenant en outre :
la détermination (222) si le plan d'exécution courant est identique au plan d'exécution antérieur, lorsque le plan d'exécution courant est identique au plan d'exécution antérieur, le stockage (224) d'une indication que la requête n'est pas dans le mode d'entraînement avec le plan d'exécution antérieur comme meilleur plan d'exécution courant à utiliser pour des instances futures de la requête, et, lorsque le plan d'exécution courant est différent du plan d'exécution antérieur, le stockage (226) du plan d'exécution courant comme dernier plan d'exécution et d'une indication que la requête est dans le mode d'entraînement, la détermination (228) si un coût du plan d'exécution courant est inférieur à un coût du meilleur plan d'exécution courant stocké pour la requête, et, lorsque le coût du plan d'exécution courant est inférieur au coût du meilleur plan d'exécution courant stocké pour la requête, le remplacement (230) du meilleur plan d'exécution courant stocké pour la requête dans le stockage de requêtes par le plan d'exécution courant ; ou
la comparaison (322) du coût du plan d'exécution courant avec un coût du plan d'exécution antérieur, si le coût du plan d'exécution courant est inférieur au coût du plan d'exécution antérieur, le stockage (320) du plan d'exécution dans le stockage de requêtes comme dernier plan d'exécution et l'indication que la requête est dans le mode d'entraînement, et, lorsque le coût du plan d'exécution courant n'est pas inférieur au coût du plan d'exécution antérieur, le stockage (324) de l'indication que la requête n'est pas dans le mode d'entraînement avec le plan d'exécution antérieur comme plan d'exécution à utiliser pour des instances futures de la requête ;
lorsqu'il est déterminé que la requête n'est pas dans le mode d'entraînement, le procédé (200, 300) comprenant en outre :
la récupération et l'exécution du plan d'exécution stocké.

2. Procédé de traitement de requêtes (200, 300) selon la revendication 1, comprenant en outre :
la réception d'une première soumission de la requête ;
la détermination qu'aucun plan d'exécution stocké n'existe pour la première soumission de la requête ;
la génération d'un premier plan d'exécution pour la première soumission de la requête basé sur une estimation d'un coût d'exécution de la requête ;
l'exécution du premier plan d'exécution et la collecte de statistiques pour le premier plan d'exécution ; et
le stockage du premier plan d'exécution et des statistiques de premier plan d'exécution.

3. Procédé de traitement de requêtes (200, 300) selon la revendication 1, la génération (214, 314) du plan d'exécution courant incluant :
la génération d'étapes multiples pour le plan d'exécution courant ;
la récupération de statistiques pour chacune des étapes multiples ayant des statistiques stockées ;
la génération de statistiques estimées pour chacune des étapes multiples qui n'ont pas de statistiques stockées ; et
la production d'un coût estimé pour le plan d'exécution courant basé sur les statistiques récupérées et les statistiques estimées.

4. Dispositif de traitement de requêtes (600) comprenant :
une interface de communication (616) configurée pour communiquer avec une base de données et un stockage de requêtes ;
une mémoire (603) stockant des instructions ; et
un processeur (602) couplé à l'interface de communication (616) et à la mémoire (603), le processeur (602) exécutant les instructions pour :
recevoir (202, 302) une requête ;
générer une valeur de hachage pour la requête et utiliser la valeur de hachage pour déterminer (204, 304) si la requête a une entrée dans un stockage de requêtes ; et
déterminer (208, 308) si la requête est dans un mode d'entraînement et qu'un plan d'exécution antérieur et des statistiques de plan d'exécution antérieur sont stockés dans le stockage de requêtes pour une soumission antérieure de la requête, le plan d'exécution antérieur étant un dernier plan d'exécution exécuté ;
lorsqu'il est déterminé que la requête est dans le mode d'entraînement, le processeur (602) exécutant en outre les instructions pour :
générer (214, 314) un plan d'exécution courant pour la requête ;
exécuter (216, 316) le plan d'exécution courant et collecter des statistiques de plan d'exécution courant ; et
stocker le plan d'exécution courant et les statistiques de plan d'exécution courant dans le stockage de requêtes ;
lorsque la requête a été trouvée dans le stockage de requêtes, le processeur (602) exécutant en outre les instructions pour déterminer (222) si le plan d'exécution courant est identique au plan d'exécution antérieur, lorsque le plan d'exécution courant est identique au plan d'exécution antérieur, stocker (224) une indication que la requête n'est pas dans le mode d'entraînement avec le plan d'exécution antérieur comme meilleur plan d'exécution courant à utiliser pour des instances futures de la requête, et, lorsque le plan d'exécution courant est différent du plan d'exécution antérieur, stocker (226) le plan d'exécution courant comme dernier plan d'exécution et une indication que la requête est dans le mode d'entraînement, déterminer (228) si un coût du plan d'exécution courant est inférieur à un coût du meilleur plan d'exécution courant stocké pour la requête, et, lorsque le coût du plan d'exécution courant est inférieur au coût du meilleur plan d'exécution courant stocké pour la requête, remplacer (230) le meilleur plan d'exécution courant stocké pour la requête dans le stockage de requêtes par le plan d'exécution courant ; ou
comparer (322) le coût du plan d'exécution courant avec un coût du plan d'exécution antérieur, si le coût du plan d'exécution courant est inférieur au coût du plan d'exécution antérieur, stocker (320) le plan d'exécution dans le stockage de requêtes comme dernier plan d'exécution et l'indication que la requête est dans le mode d'entraînement, et, lorsque le coût du plan d'exécution courant n'est pas inférieur au coût du plan d'exécution antérieur, stocker (324) l'indication que la requête n'est pas dans le mode d'entraînement avec le plan d'exécution antérieur comme plan d'exécution à utiliser pour des instances futures de la requête ;
lorsqu'il est déterminé que la requête n'est pas dans le mode d'entraînement, le processeur (602) exécutant en outre les instructions pour :
récupérer et exécuter (310) le plan d'exécution stocké.

5. Dispositif de traitement de requêtes (600) selon la revendication 4, le processeur (602) exécutant en outre les instructions pour :
recevoir une première soumission de la requête ;
déterminer qu'aucun plan d'exécution pour la première soumission de la requête n'est stocké dans le stockage de requêtes ;
générer un premier plan d'exécution pour la première soumission de la requête basé sur une estimation d'un coût d'exécution de la requête ;
exécuter le premier plan d'exécution et collecter des statistiques de premier plan d'exécution ;
générer une valeur de hachage pour la requête ; et
stocker le premier plan d'exécution et les statistiques de premier plan d'exécution dans le stockage de requêtes indexé par la valeur de hachage.

6. Dispositif de traitement de requêtes (600) selon la revendication 4, le processeur (602) exécutant en outre les instructions pour :
générer des étapes multiples pour le plan d'exécution courant ;
générer des valeurs de hachage respectives pour les étapes multiples ;
récupérer des statistiques du stockage de requêtes pour chacune des étapes multiples ayant des statistiques stockées, en utilisant les valeurs de hachage respectives comme index ;
générer des statistiques estimées pour chacune des étapes multiples qui n'ont pas de statistiques stockées ; et
produire un coût estimé pour le plan d'exécution courant basé sur les statistiques récupérées et les statistiques estimées générées.

7. Support lisible par ordinateur incluant des instructions qui, lorsqu'elles sont exécutées par un ou plusieurs processeurs, configurent le ou les processeurs pour effectuer le procédé selon l'une quelconque des revendications 1 à 3.

8. Produit programme informatique incluant des instructions qui, lorsqu'elles sont exécutées par un ordinateur, amènent l'ordinateur à effectuer le procédé selon l'une quelconque des revendications 1 à 3.
